# EUROPEAN PATENT SPECIFICATION

(11) **EP 3 800 763 B1**
(45) Date of publication and mention of the grant of the patent: **09.11.2022**
(21) Application number: 20827998.4
(22) Date of filing: 05.03.2020
(51) Int. Cl.: H02J 9/06

(54) **MULTI-MODE UNINTERRUPTIBLE POWER SUPPLY CONTROL METHOD, CONTROL APPARATUS AND CONTROL TERMINAL**
STEUERVERFAHREN FÜR UNTERBRECHUNGSFREIE MULTIMODALE STROMVERSORGUNG, STEUERVORRICHTUNG UND STEUERENDGERÄT
PROCÉDÉ DE COMMANDE D'ALIMENTATION ÉLECTRIQUE SANS COUPURE MULTIMODE, APPAREIL DE COMMANDE ET TERMINAL DE COMMANDE

(30) Priority: 22.07.2019 CN 201910660614
(43) Date of publication of application: 07.04.2021
(73) Proprietor: Zhangzhou Kehua Technology Co., Ltd., Zhangzhou, Fujian 363000 (CN); Kehua Hengsheng Co., Ltd., Xiamen, Fujian 361006 (CN)
(72) Inventor: WANG, Dingfu, Zhangzhou Fujian 363000 (CN); GAO, Lihong, Zhangzhou Fujian 363000 (CN); ZHANG, Baosen, Zhangzhou Fujian 363000 (CN); GUO, Xuemeng, Zhangzhou Fujian 363000 (CN)
(74) Representative: Petculescu, Ana-Maria
(86) International application number: PCT/CN2020/077964
(87) International publication number: WO 2021/012679

(56) References cited:
- CN-A- 104 362 730
- CN-A- 105 680 559
- CN-A- 109 655 757
- CN-A- 110 474 420
- US-A- 5 612 580
- US-A1- 2012 306 274

## Description

### TECHNICAL FIELD

The present invention belongs to the technical field of uninterruptible power supplies (UPS), in particular to a control method, a control device, a control terminal and a computer-readable storage medium for a multi-mode UPS.

### BACKGROUND

A UPS is a system component that connects a battery to a host and converts directcurrent (DC) power into utility or grid power through a module circuit, such as an inverter of the host. An UPS is typically used to provide a stable and uninterruptible power supply for the load. When the grid input is normal, the UPS stabilizes the grid power and supplies it to the load. In this case, the UPS serves as an alternating-current (AC) voltage stabilizer, while charging a battery. When the grid input is interrupted, the UPS immediately converts the DC power of the battery through the inverter to continue to supply power to the load, thereby maintaining the normal operation of the load and protecting the software and hardware of the load from damage.

A multi-mode UPS is capable of providing multiple AC power supply modes. For example, the operating modes of the multi-mode UPS may include a single-input single-output mode (single-phase 220V/380V input and single-phase 220V/380V output), a three-input single-output mode (three-phase 220V/380V input and single-phase 220V/380V output), a single-input three-output mode (single-phase 220V/380V input and three-phase 220V/380V output), a three-input three-output mode (three-phase 220V/380V input and three-phase 220V/380V output), and other modes.

Operating efficiency is an index used to evaluate the power conversion capability of the UPS. The operating efficiency calibrated on the UPS generally refers to the full-load efficiency, but in fact, the operating efficiency is a dynamic index and varies under different load conditions. Moreover, in practical use, the UPS typically operates under a light-load condition, but the UPS is less efficient when operating under the light-load conditior

US 5 612 580 discloses an UPS having one converter and one inverter, with an energy storage in between. It operates in one of three modes, Off-line mode where power from the input is supplied to the load; a first On-line mode when the input power is below a first threshold the UPS boosts it above and supplies it to a load; and a second On-line mode when the input power is below a second threshold, power is provided from the energy storage to the load through the inverter.US 2012/306274 also teaches an UPS having one converter and one inverter, with an energy storage there between. It operates in several modes adjusting current voltage depending on the plurality of loads being dependent on the UPS. It thereby raises the supplied current and voltage levels as the plurality of loads increases.

### TECHNICAL PROBLEM

In view of the above, in order to solve the problem of low operating efficiency of the multi-mode UPS in the prior art when operating under the light-load condition, the present invention provides a multi-mode UPS, a control method and a control device for the multi-mode UPS, and a computer-readable storage medium.

### TECHNICAL SOLUTION

The present invention provides a control method specified by claim 1, and a control device specified by claim 6.

### ADVANTAGES

In the present invention, it is determined whether the multi-mode UPS is currently operating under a light-load condition by obtaining the load rate and the current operating mode of the multi-mode UPS and determining whether the load rate is less than a preset first threshold. If the load rate is less than the first threshold, that is, when the multi-mode UPS operates under the light-load condition, the operation quantity of the power units of the multi-mode UPS corresponding to the operating mode is reduced. Since the load rate is less than the first threshold, the reduced quantity of the power units can be controlled, so that the operating power unit is capable of bearing the current load power without affecting the normal operation of the multi-mode UPS. Moreover, the power consumption can be diminished by reducing the operation quantity of the power units, thereby improving the power conversion efficiency of the multi-mode UPS, that is, improving the operating efficiency of the multi-mode UPS under the light-load condition.

### BRIEF DESCRIPTION OF THE DRAWINGS

In order to more clearly illustrate the technical solution in embodiments of the present invention, the drawings required in the prior art and the embodiments of the present invention are described briefly below. Obviously, the drawings described below are only some, not all, embodiments of the present invention. For those having ordinary skill in the art, other drawings may be obtained according to these drawings without any creative effort.
FIG. 1 is a flow chart for implementing the control method for the multi-mode UPS according to an embodiment of the present invention;
FIG. 2 is a schematic diagram showing the connection of an operating mode of the multi-mode UPS according to an embodiment of the present invention;
FIG. 3 is a schematic diagram showing the connection of another operating mode of the multi-mode UPS according to an embodiment of the present invention;
FIG. 4 is a schematic diagram showing the structure of the control device for the multi-mode UPS according to an embodiment of the present invention; and
FIG. 5 is a schematic diagram showing the multi-mode UPS according to an embodiment of the present invention.

### DETAILED DESCRIPTION OF THE EMBODIMENTS

In order to thoroughly understand the embodiments of the present invention, specific details such as specific system structures and technologies are described below only for illustration rather than limitation. However, those skilled in the art should be aware that the present invention may also be implemented in other embodiments without these specific details. In other cases, detailed descriptions of well-known systems, devices, circuits and methods are omitted to prevent unnecessary details from interfering with the description of the present invention.

In order to make the objectives, technical solutions and advantages of the present invention clearer, specific embodiments of the present invention are illustrated below in conjunction with the drawings.

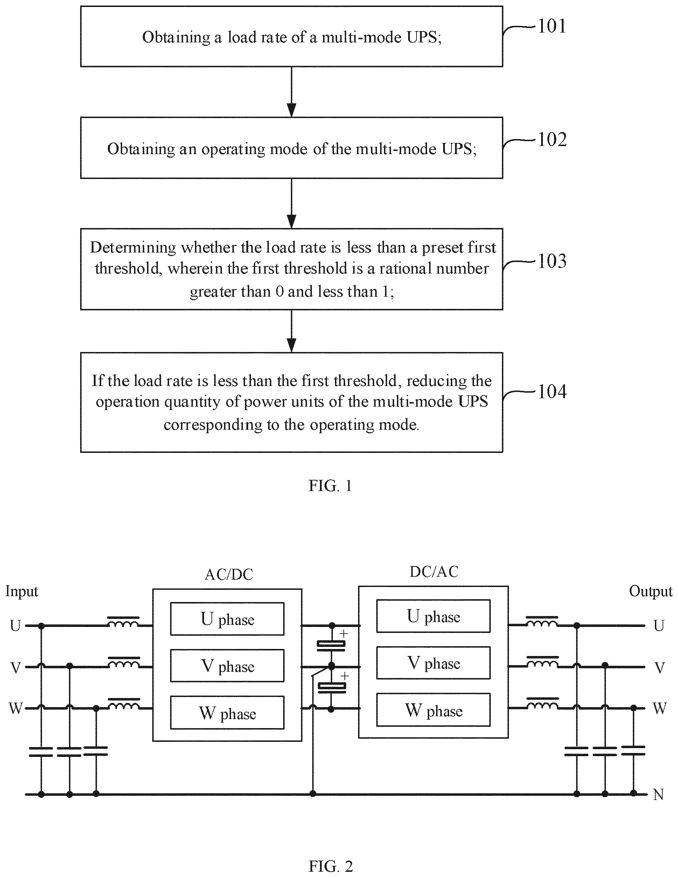

FIG. 1 shows a flow chart of a control method for a multi-mode UPS according to an embodiment of the present invention, which is described in detail as follows.

Step 101: a load rate of the multi-mode UPS is obtained.

In an embodiment of the present invention, the load rate of the UPS during operation is calculated. Specifically, the load power carried by the UPS during operation is measured, and the ratio of the load power to the full-load power of the UPS is calculated and used as the load rate of the UPS.

As an example, if the full-load power of a UPS is P, and the actual load power of the UPS during operation is Pi, then Pi/P is the load rate of the UPS.

Step 102: an operating mode of the multi-mode UPS is obtained.

In an embodiment of the present invention, the operating mode of the multi-mode UPS refers to a current input or output mode of the multi-mode UPS. For example, when the multi-mode UPS is connected to a single-phase power input, its current operating mode is a single-input input mode; and when the multi-mode UPS outputs a single-phase power supply to a load, its current operating mode is a single-output output mode.

It should be noted that the classification of the above operating modes is determined from the point of view of input or output. According to the overall circuit connection and operation of the multi-mode UPS, the operating mode thereof includes a single-input single-output mode, a single-input three-output mode, a three-input single-output mode, and others. Among them, the single-input three-output mode belongs to a single-input input mode, the three-input single-output mode belongs to a single-output output mode, and the single-input single-output mode belongs to both the single-input input mode and the single-output output mode.

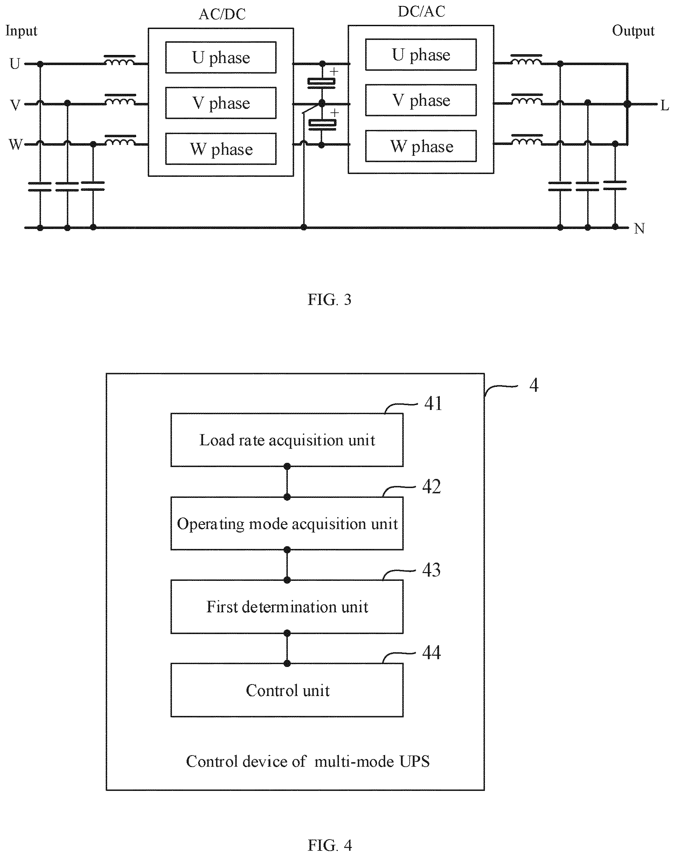

In an embodiment of the present invention, the multi-mode UPS may include three power units for rectification, such as the AC/DC module shown in FIG. 2 and FIG. 3. The three power units for rectification, when connecting the three-phase power input (U, V, W), may be separately connected to one-phase power inputs, and each power unit for rectification is configured to rectify the corresponding one-phase power input.

Additionally, the multi-mode UPS may further include three front filter units, such as three LC filter units connected to the AC/DC module on the same side as the input ends shown in FIG. 2 and FIG. 3). When the AC/DC module is connected to a single-phase power input, each power unit for rectification of the AC/DC module is connected to one front filter unit to form one filter and rectification circuit. Three filter and rectification circuits are formed in total, and the three filter and rectification circuits are connected in parallel. The input ends (U, V and W) are connected to the single-phase power input, and the single-phase power input is input to the three power units for rectification through the three LC filter units, and then output after being filtered and rectified. Since the three filter and rectification circuits are connected in parallel, when the single-phase power input is connected, even if one or two of the power units for rectification are stopped, it will not affect the filtering and rectification of the single-phase input power supply.

In an embodiment of the present invention, the multi-mode UPS may include three power units for inversion, such as the DC/AC module shown in FIG. 2 and FIG. 3. The three power units for inversion, when providing the three-phase power output to the load, may be separately used to invert one-phase power. As shown in FIG. 2, the three power units for inversion in the DC/AC module provide, to the load, the three-phase power output corresponding to U phase, V phase and W phase, respectively.

Additionally, the multi-mode UPS may further include three rear filter units, such as three inductor-capacitor (LC) filter units connected to the DC/AC module on the same side as the output ends shown in FIG. 3). When the DC/AC module provides a single-phase power output, each power unit for inversion in the DC/AC module is connected to one rear filter unit to form one inversion and filter circuit. Three inversion and filter circuits are formed in total, and the three inversion and filter circuits are connected in parallel. The power input from the AC/DC module is inverted through the three power units for inversion, and filtered through the three rear filter units to the output ends. As shown in FIG. 3, the output ends are short-connected to provide the single-phase power output L. Since the three inversion and filter circuits are connected in parallel, even if one or two of the power units for inversion are stopped, it will not affect the inversion and filtering when the single-phase power output is provided.

In an embodiment of the present invention, the operating mode of the multi-mode UPS can be obtained by detecting the connection status of the power units for rectification and the connection status of the three power units for inversion. In addition, the multi-mode UPS can also output an indication indicating the current operating mode after changing the operating mode, so that the control module receives the indication to obtain the operating mode of the multi-mode UPS.

Step 103: it is determined whether the load rate is less than a preset first threshold, wherein the first threshold is a rational number greater than 0 and less than 1.

In an embodiment of the present invention, the load rate of the UPS during operation is compared with a preset first threshold to determine whether the load rate of the UPS during operation is less than the first threshold. The first threshold is flexibly selected according to the variation curve of the operating efficiency of the UPS with the load rate, and is related to the determination of whether the multi-mode UPS is in the light-load condition. For example, the first threshold may be set to 1/2, or the first threshold may be set to 2/3, indicating that the multi-mode UPS is in a light-load condition when the load rate of the multi-mode UPS is less than the first threshold.

Step 104: if the load rate is less than the first threshold, the operation quantity of the power units of the multi-mode UPS corresponding to the operating mode is reduced.

In an embodiment of the present invention, when the load rate is less than the preset first threshold, the operation quantity of the power units of the multi-mode UPS corresponding to the current operating mode may be reduced. The aforementioned operation quantity refers to the number of the power units in the operating state. For example, when three power units are all in the operating state, the operation quantity is three. Reducing the operation quantity means to stop the operation of one or two of the power units in the operating state.

In an optional embodiment, the power units of the multi-mode UPS include three power units for rectification, and the operating mode of the multi-mode UPS includes a single-input input mode. The three power units for rectification correspond to the single-input input mode. When the load rate of the multi-mode UPS is less than the preset first threshold, and when the operating mode of the multi-mode UPS is the single-input input mode, the operation quantity of the three power units for rectification may be reduced, for example, the operation of one power unit for rectification may be stopped.

It should be noted that the above single-input input mode may include a single-input three-output mode and a single-input single-output mode. In the single-input three-output mode or the single-input single-output mode, the above three power units for rectification are connected in parallel. If the load rate of the multi-mode UPS is less than the preset first threshold, the operation quantity of the three power units for rectification may be reduced.

In an optional embodiment, the power units of the multi-mode UPS include three power units for inversion, and the operating mode of the multi-mode UPS includes a single-output output mode. The three power units for inversion correspond to the single-output output mode. When the load rate of the multi-mode UPS is less than the preset first threshold, and when the operating mode of the multi-mode UPS is the single-output output mode, the operation quantity of the three power units for inversion may be reduced, for example, the operation of one power unit for inversion may be stopped.

It should be noted that the above single-output output mode may include a three-input single-output mode and a single-input single-output mode. In the three-input single-output mode or the single-input single-output mode, the above three power units for inversion are connected in parallel. If the load rate of the multi-mode UPS is less than the preset first threshold, the operation quantity of the three power units for inversion may be reduced.

In an optional embodiment, prior to step 103, the control method may further include the following step: it is determined whether the load rate is less than a preset second threshold, wherein the second threshold is a rational number greater than 0 and less than 1, and the second threshold is less than the first threshold.

Correspondingly, the step in which the operation quantity of the power units of the multi-mode UPS corresponding to the operating mode is reduced if the load rate is less than the first threshold includes:
if the load rate is less than the first threshold and not less than the second threshold, the operation quantity of the power units of the multi-mode UPS corresponding to the operating mode is reduced by a first specified quantity; and
if the load rate is less than the second threshold, the operation quantity of the power units of the multi-mode UPS corresponding to the operating mode is reduced by a second specified quantity, wherein, the second specified quantity is greater than the first specified quantity.

In the embodiment, two thresholds (the first threshold and the second threshold) may be set for dividing the light-load condition of the multi-mode UPS into two levels. A load rate that is less than the first threshold and not less than the second threshold indicates a light-load condition at the first level. A load rate that is less than the second threshold indicates a light-load condition at the second level, which has less loads than the light-load condition at the first level. In the light-load condition at the first level, the operation quantity of the power units corresponding to the operating mode is reduced by the first specified quantity. In the light-load condition at the second level, the operation quantity of the power units corresponding to the operating mode is reduced by the second specified quantity. Since the light-load condition at the second level has less loads than the light-load condition at the first level, the operation of more power units may be stopped, that is, the second specified quantity is greater than the first specified quantity.

As an example, the multi-mode UPS includes three power units for rectification and three power units for inversion. In the single-input three-output mode, when the load rate is less than 2/3 and greater than 1/3, the operation of one power unit for rectification may be stopped. When the load rate is less than 1/3, if being in the single-input three-output mode, the operation of two power units for rectification may be stopped.

As an example, the multi-mode UPS includes three power units for rectification and three power units for inversion. In the three-input single-output mode, when the load rate is less than 2/3 and greater than 1/3, the operation of one power unit for inversion may be stopped. When the load rate is less than 1/3, if being in the three-input single-output mode, the operation of two power units for inversion may be stopped.

As an example, the multi-mode UPS includes three power units for rectification and three power units for inversion. In single-input single-output mode, when the load rate is less than 2/3 and greater than 1/3, the operation of one power unit for rectification and the operation of one power unit for inversion may be stopped. When the load rate is less than 1/3, the operation of two power units for rectification and the operation of two power units for inversion may be stopped.

It can be seen from the above that in the present invention, it is determined whether the multi-mode UPS is currently operating under the light-load condition by obtaining the load rate and the current operating mode of the multi-mode UPS and determining whether the load rate is less than a preset first threshold. If the load rate is less than the first threshold, that is, when the multi-mode UPS operates under the light-load condition, the operation quantity of the power units of the multi-mode UPS corresponding to the operating mode is reduced. Since the load rate is less than the first threshold, the reduced quantity of the power units can be controlled, so that the operating power unit is capable of bearing the current load power without affecting the normal operation of the multi-mode UPS. Moreover, the power consumption can be diminished by reducing the operation quantity of the power units, thereby improving the power conversion efficiency of the multi-mode UPS, that is, improving the operating efficiency of the multi-mode UPS under the light-load condition.

It should be understood that the sequence number of each step in the above embodiments does not mean the order of implementation, that is, the order of implementation of each process shall be determined by its function and inherent logic, and shall not constitute any limitation on the implementation process of the embodiments of the present invention.

The following embodiment illustrates the device of the present invention, and the specific details thereof not described in detail can refer to the above corresponding embodiment of the method of the present invention.

FIG. 4 is a schematic diagram showing the structure of the control device for the multi-mode UPS according to an embodiment of the present invention. For convenience of illustration, only the parts related to the embodiment of the present invention are shown, which are described in detail as follows.

As shown in FIG. 4, the control device 4 for the multi-mode UPS includes the load rate acquisition unit 41, the operating mode acquisition unit 42, the first determination unit 43 and the control unit 44.

The load rate acquisition unit 41 is configured to obtain a load rate of the multi-mode UPS.

The operating mode acquisition unit 42 is configured to obtain an operating mode of the multi-mode UPS.

The first determination unit 43 is configured to determine whether the load rate is less than a preset first threshold, wherein the first threshold is a rational number greater than 0 and less than 1.

The control unit 44 is configured to, if the load rate is less than the first threshold, reduce the operation quantity of the power units of the multi-mode UPS corresponding to the operating mode.

The power units of the multi-mode UPS include three power units for rectification, and the operating mode includes a single-input input mode. The three power units for rectification correspond to the single-input input mode.

The multi-mode UPS further includes three front filter units, and the single-input input mode includes a single-input three-output mode and a single-input single-output mode. In the single-input input mode, each power unit for rectification is connected to one front filter unit to form one filter and rectification circuit. Three filter and rectification circuits are formed in total, and the three filter and rectification circuits are connected in parallel.

The power units of the multi-mode UPS include three power units for inversion, and the operating mode includes a single-output output mode. The three power units for inversion correspond to the single-output output mode.

The multi-mode UPS further includes three rear filter units, and the single-output output mode includes a three-input single-output mode and a single-input single-output mode. In the single-output output mode, each power unit for inversion is connected to one rear filter unit to form one inversion and filter circuit. Three inversion and filter circuits are formed in total, and the three inversion and filter circuits are connected in parallel.

The control device 4 for the multi-mode UPS further includes a second determination unit, and the second determination unit is configured to determine whether the load rate is less than a preset second threshold, wherein the second threshold is a rational number greater than 0 and less than 1, and the second threshold is less than the first threshold.

Correspondingly, the control unit 44 is further configured to, if the load rate is less than the first threshold and not less than the second threshold, reduce the operation quantity of the power units of the multi-mode UPS corresponding to the operating mode by a first specified quantity; and
the control unit 44 is further configured to, if the load rate is less than the second threshold, reduce the operation quantity of the power units of the multi-mode UPS corresponding to the operating mode by a second specified quantity, wherein, the second specified quantity is greater than the first specified quantity.

The first threshold is 2/3, and the second threshold is 1/3.

It can be seen from the above that in the present invention, it is determined whether the multi-mode UPS is currently operating under the light-load condition by obtaining the load rate and the current operating mode of the multi-mode UPS and determining whether the load rate is less than a preset first threshold. If the load rate is less than the first threshold, that is, when the multi-mode UPS operates under the light-load condition, the operation quantity of the power units of the multi-mode UPS corresponding to the operating mode is reduced. Since the load rate is less than the first threshold, the reduced quantity of the power units can be controlled, so that the operating power unit is capable of bearing the current load power without affecting the normal operation of the multi-mode UPS. Moreover, the power consumption can be diminished by reducing the operation quantity of the power units, thereby improving the power conversion efficiency of the multi-mode UPS, that is, improving the operating efficiency of the multi-mode UPS under the light-load condition.

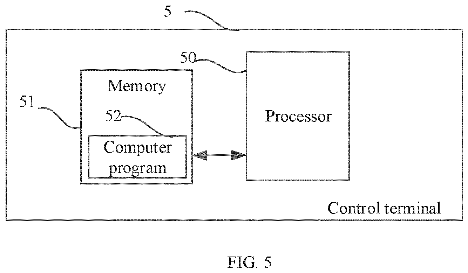

FIG. 5 is a schematic diagram showing the control terminal It includes the processor 50, the memory 51, and the computer program 52 stored in the memory 51 and operable on the processor 50. The processor 50 is configured to execute the computer program 52 to implement each step in the above embodiment of the control method for the multi-mode UPS, such as step 101 to step 104 shown in FIG. 1. Alternatively, the processor 50 is configured to execute the computer program 52 to implement the function of each module/unit in the above embodiment of the device, such as the functions of the unit 41 to the unit 44 shown in FIG. 4.

As an example, the computer program 52 may be divided into one or more modules/units, and the one or more modules/units are stored in the memory 51 and executed by the processor 50 to implement the present invention. The one or more modules/units may be a series of computer program instruction segments capable of performing specific functions, and the instruction segments are used to describe the execution process of the computer program 52 in the control terminal 5. For example, the computer program 52 may be divided into a load rate acquisition unit, an operating mode acquisition unit, a first determination unit and a control unit. The specific function of each unit is described as follows.

The load rate acquisition unit is configured to obtain a load rate of the multi-mode UPS.

The operating mode acquisition unit is configured to obtain an operating mode of the multi-mode UPS.

The first determination unit is configured to determine whether the load rate is less than a preset first threshold, wherein the first threshold is a rational number greater than 0 and less than 1.

The control unit is configured to, if the load rate is less than the first threshold, reduce the operation quantity of the power units of the multi-mode UPS corresponding to the operating mode.

The control terminal 5 may be a computing device such as a desktop computer, a notebook, a palmtop computer and a cloud server. The multi-mode UPS may include, but is not limited to, the processor 50 and the memory 51. It should be understood by those skilled in the art that FIG. 5 is only an example of the control terminal 5 and does not constitute a limitation to the control terminal 5. The control terminal 5 may include more or less components than those shown in FIG. 5, or a combination of some components, or different components, for example, the multi-mode UPS may further include an input and output device, a network access device, a bus, and the like.

The processor 50 may be a central processing unit (CPU), a general-purpose processor, a digital signal processor (DSP), an application specific integrated circuits (ASIC), a field-programmable gate array (FPGA), a programmable logic device, a discrete gate or transistor logic device, a discrete hardware component, and others. The general-purpose processor may be a microprocessor, or any conventional processor.

The memory 51 may be an internal memory unit of the control terminal 5, such as a hard disk or a memory of the control terminal 5. The memory 51 may also be an external storage device of the control terminal 5, such as a plug-in hard disk, a smart media card (SMC), a secure digital (SD) card, a flash card, and other devices arranged on the control terminal 5. Further, the memory 51 may include both an internal memory unit and an external storage device of the control terminal 5. The memory 51 is configured to store the computer program and other programs and data required by the multi-mode UPS. The memory 51 may further be configured to temporarily store data that has been output or is to be output.

## Claims

1. A control method for a multi-mode uninterruptible power supply (UPS) wherein the multi-mode UPS comprises three power units for rectification, and an operating mode of the three power units for rectification comprises a single-input input mode; or
three power units for inversion, and an operating mode of the three power units for inversion comprises a single-output output mode;
the method comprising:
obtaining a load rate of the multi-mode UPS (101);
obtaining an operating mode of the multi-mode UPS (102) wherein the operating mode of the multi-mode UPS
is selected from a single-input single-output mode, a single-input three-output mode or a three-input single-output mode;
determining whether the load rate is less than a preset first threshold, wherein the first threshold is a rational number greater than 0 and less than 1 (103); and
if the load rate is less than the first threshold, reducing an operation quantity of the power units of the multi-mode UPS corresponding to the operating mode (104) of the multi-mode UPS by stopping operation of one or two of the power units in an operating state.

2. The control method for the multi-mode UPS of claim 1, **characterized in that**, the multi-mode UPS further comprises three front filter units, and the single-input input mode comprises the single-input three-output mode and the single-input single-output mode; in the single-input input mode, each power unit for rectification is connected to one front filter unit to form one filter and rectification circuit; three filter and rectification circuits are formed in total, and the three filter and rectification circuits are connected in parallel.

3. The control method for the multi-mode UPS of claim 1, **characterized in that**, the multi-mode UPS further comprises three rear filter units, and the single-output output mode comprises the three-input single-output mode and the single-input single-output mode; in the single-output output mode, each power unit for inversion is connected to one rear filter unit to form one inversion and filter circuit; three inversion and filter circuits are formed in total, and the three inversion and filter circuits are connected in parallel.

4. The control method for the multi-mode UPS of any one of claims 1-3, **characterized in that**, prior to the step of reducing the operation quantity of the power units of the multi-mode UPS corresponding to the operating mode if the load rate is less than the first threshold (104), the control method further comprises:
determining whether the load rate is less than a preset second threshold, wherein the second threshold is a rational number greater than 0 and less than 1, and the second threshold is less than the first threshold; and
correspondingly, the step of reducing the operation quantity of the power units of the multi-mode UPS corresponding to the operating mode of the multi-mode UPS if the load rate is less than the first threshold comprises:
if the load rate is less than the first threshold and not less than the second threshold, reducing the operation quantity of the power units of the multi-mode UPS corresponding to the operating mode by a first specified quantity; and
if the load rate is less than the second threshold, reducing the operation quantity of the power units of the multi-mode UPS corresponding to the operating mode by a second specified quantity, wherein, the second specified quantity is greater than the first specified quantity.

5. The control method for the multi-mode UPS of claim 4, **characterized in that**, the first threshold is 2/3, and the second threshold is 1/3.

6. A control device for a multi-mode UPS wherein the multi-mode UPS comprises three power units for rectification, and an operating mode the three power units for rectification comprises a single-input input mode; or
three power units for inversion, and an operating mode the three power units for inversion comprises a single-output output mode;
the control device comprising:
a load rate acquisition unit (41), wherein the load rate acquisition unit is configured to obtain a load rate of the multi-mode UPS;
an operating mode acquisition unit (42), wherein the operating mode acquisition unit is configured to obtain an operating mode of the multi-mode UPS;
a first determination unit (43), wherein the first determination unit is configured to determine whether the load rate is less than a preset first threshold, wherein the first threshold is a rational number greater than 0 and less than 1; and
a control unit (44), wherein the control unit is configured to, if the load rate is less than the first threshold, reduce an operation quantity of power units of the multi-mode UPS corresponding to the operating mode. of the multi-mode UPS by stopping operation of one or two of the power units in an operating state.

7. A control terminal (5), comprising a memory (51), a processor (50), and a computer program (52)stored in the memory and runnable on the processor, wherein, the processor is configured to execute the computer program to implement the steps of the control method for the multi-mode UPS of any one of claims 1-5.

8. A computer-readable storage medium, **characterized in that**, a computer program is stored in the computer-readable storage medium, and the computer program is configured to be executed by a processor to implement the steps of the control method for the multi-mode UPS of any one of claims 1-5.

## Patentansprüche

1. Steuerverfahren für unterbrechungsfreie Mehrmodus-Stromversorgung (USV), wobei die Mehrmodus-USV drei Leistungseinheiten zur Gleichrichtung umfasst, und ein Betriebsmodus der drei Leistungseinheiten zur Gleichrichtung einen Eingangsmodus mit einem Eingang umfasst; oder
drei Leistungseinheiten zur Umrichtung, und ein Betriebsmodus der drei Leistungseinheiten zur Umrichtung ein Ausgangsmodus mit einem Ausgang umfasst;
wobei das Verfahren umfasst:
Erlangen einer Lastrate der Mehrmodus-USV (101);
Erlangen eines Betriebsmodus der Mehrmodus-USV (102), wobei der Betriebsmodus der Mehrmodus-USV ausgewählt wird aus einem Modus mit einem Eingang und einem Ausgang, einem Modus mit einem Eingang und drei Ausgängen oder einem Modus mit drei Eingängen und einem Ausgang;
Bestimmen, ob die Lastrate kleiner als ein voreingestellter erster Schwellenwert ist, wobei der erste Schwellenwert eine rationale Zahl größer als 0 und kleiner als 1 ist (103); und
wenn die Lastrate kleiner als der erste Schwellenwert ist, Reduzieren einer Betriebsgröße der Leistungseinheiten der Mehrmodus-USV entsprechend dem Betriebsmodus (104) der Mehrmodus-USV durch Anhalten des Betriebs von einer oder zwei Leistungseinheiten in einem Betriebszustand.

2. Steuerverfahren für eine Mehrmodus-USV nach Anspruch 1, **dadurch gekennzeichnet, dass** die Mehrmodus-USV ferner drei vordere Filtereinheiten umfasst und der Eingangsmodus mit einem Eingang den Modus mit einem Eingang und drei Ausgängen und den Modus mit einem Eingang und einem Ausgang umfasst; wobei im Eingangsmodus mit einem Eingang jede Leistungseinheit zur Gleichrichtung mit einer vorderen Filtereinheit verbunden ist, um eine Filter- und Gleichrichtungsschaltung zu bilden; wobei insgesamt drei Filter- und Gleichrichtungsschaltungen gebildet werden und die drei Filter- und Gleichrichtungsschaltungen parallel geschaltet sind.

3. Steuerverfahren für eine Mehrmodus-USV nach Anspruch 1, **dadurch gekennzeichnet, dass** die Mehrmodus-USV ferner drei hinteren Filtereinheiten umfasst und der Ausgangsmodus mit einem Ausgang den Modus mit drei Eingängen und einem Ausgang und den Modus mit einem Eingang und einem Ausgang umfasst; wobei im Ausgangsmodus mit einem Ausgang, jede Leistungseinheit zur Umrichtung mit der hinteren Filtereinheit verbunden ist, um eine Umrichtungsund Filterschaltung zu bilden; wobei insgesamt drei Umrichtungs- und Filterschaltungen gebildet werden und die drei Umrichtungs- und Filterschaltungen parallel geschaltet werden.

4. Steuerverfahren für eine Mehrmodus-USV nach einem der Ansprüche 1 bis 3, **dadurch gekennzeichnet, dass** das Steuerverfahren vor dem Schritt des Reduzierens der Betriebsgröße der Leistungseinheiten der Mehrmodus-USV entsprechend dem Betriebsmodus, wenn die Lastrate kleiner als der erste Schwellenwert ist (104) ferner umfasst:
Bestimmen, ob die Lastrate kleiner als ein voreingestellter zweiter Schwellenwert ist, wobei der zweite Schwellenwert eine rationale Zahl größer als 0 und kleiner als 1 ist und der zweite Schwellenwert kleiner als der erste Schwellenwert ist; und
entsprechend der Schritt des Reduzierens der Betriebsgröße der Leistungseinheiten der Mehrmodus-USV entsprechend dem Betriebsmodus, wenn die Lastrate kleiner als der erste Schwellenwert ist, umfasst:
wenn die Lastrate kleiner als der erste Schwellenwert und nicht kleiner als der zweite Schwellenwert ist, Reduzieren der Betriebsgröße der Leistungseinheiten der Mehrmodus-USV entsprechend dem Betriebsmodus um eine erste festgelegte Größe; und
wenn die Lastrate kleiner als der zweite Schwellenwert ist, Reduzieren der Betriebsgröße der Leistungseinheiten der Mehrmodus-USV entsprechend dem Betriebsmodus um eine zweite festgelegte Größe, wobei die zweite festgelegte Größe größer als erste festgelegte Größe ist.

5. Steuerverfahren für eine Mehrmodus-USV nach Anspruch 4, **dadurch gekennzeichnet, dass** der erste Schwellenwert 2/3 ist und der zweite Schwellenwert 1/3 ist.

6. Steuervorrichtung für unterbrechungsfreie Mehrmodus-USV, wobei die Mehrmodus-USV drei Leistungseinheiten zur Gleichrichtung umfasst, und ein Betriebsmodus der drei Leistungseinheiten zur Gleichrichtung einen Eingangsmodus mit einem Eingang umfasst; oder
drei Leistungseinheiten zur Umrichtung, und ein Betriebsmodus der drei Leistungseinheiten zur Umrichtung ein Ausgangsmodus mit einem Ausgang umfasst;
wobei die Steuervorrichtung umfasst:
eine Lastratenerfassungseinheit (41), wobei die Lastratenerfassungseinheit dazu konfiguriert ist, die Lastrate der Mehrmodus-USV zu erlangen;
eine Betriebsmoduserfassungseinheit (42), wobei die Betriebsmoduserfassungseinheit dazu konfiguriert ist, den Betriebsmodus der Mehrmodus-USV zu erlangen;
eine erste Bestimmungseinheit (43), wobei die erste Bestimmungseinheit dazu konfiguriert ist, zu bestimmen, ob die Lastrate kleiner als ein voreingestellter erster Schwellenwert ist, wobei der erste Schwellenwert eine rationale Zahl größer als 0 und kleiner als 1 ist; und
eine Steuereinheit (44), wobei die Steuereinheit dazu konfiguriert ist, eine Betriebsgröße der Leistungseinheiten der Mehrmodus-USV entsprechend dem Betriebsmodus (104) der Mehrmodus-USV durch Anhalten des Betriebs von einer oder zwei Leistungseinheiten in einem Betriebszustand zu reduzieren, wenn die Lastrate kleiner als der erste Schwellenwert ist.

7. Steuerendgerät (5), umfassend einen Speicher (51), einen Prozessor (50) und ein Computerprogramm (52) das in dem Speicher gespeichert und auf dem Prozessor ausführbar ist, wobei der Prozessor dazu konfiguriert ist, das Computerprogramm auszuführen, um die Schritte des Steuerverfahrens für Mehrmodus-USV nach einem der Ansprüche 1 bis 5 umzusetzen.

8. Computerlesbares Speichermedium, **dadurch gekennzeichnet, dass** ein Computerprogramm auf dem computerlesbaren Speichermedium gespeichert ist und das Computerprogramm dazu konfiguriert ist, durch einen Prozessor ausgeführt zu werden, um die Schritte des Steuerverfahrens für Mehrmodus-USV nach einem der Ansprüche 1 bis 5 umzusetzen.

## Revendications

1. Un procédé de contrôle d'alimentation sans coupure à modes multiples (ASC) dans lequel l'ASC à modes multiples comprend trois unités d'alimentation électrique de rectification, et un mode opératoire des trois unités d'alimentation électrique de rectification comprend un mode d'entrée à entrée unique ; ou
trois unités d'alimentation électrique d'inversion, et un mode opératoire des trois unités d'alimentation électrique d'inversion comprend un mode de sortie à sortie unique ;
le procédé comprenant :
l'obtention d'un taux de charge de l'ASC à modes multiples (101) ;
l'obtention d'un mode opératoire de l'ASC à modes multiples (102) dans lequel le mode opératoire de l'ASC à modes multiples est sélectionné entre un mode à entrée unique et sortie unique, un mode à entrée unique et trois sorties, et un mode à trois entrées et sortie unique ;
déterminer si le taux de charge est inférieur à un premier seuil prédéfini, dans lequel le premier seuil est un nombre rationnel supérieur à 0 et inférieur à 1 (103) ; et
si le taux de charge est inférieur au premier seuil prédéfini, réduire la quantité opérationnelle d'unités d'alimentation électrique de l'ASC à modes multiples correspondant au mode opérationnel (104) de l'ASC à modes multiples en faisant cesser le fonctionnement d'une ou de deux unités d'alimentation électrique en état opérationnel.

2. Un procédé de contrôle d'ASC à modes multiples selon la revendication 1, **caractérisé en ce que**, l'ASC à modes multiples comprend en outre trois unités de filtre avant, et le mode d'entrée à entrée unique comprend le mode à trois entrées et sortie unique et le mode à entrée unique et sortie unique ; en mode à entrée unique, chaque unité d'alimentation électrique de rectification est raccordée à une unité de filtre avant pour former un circuit de filtre et rectification ; trois circuits de filtre et rectification sont formés au total, et les trois circuits de filtre et rectification sont raccordés en parallèle.

3. Un procédé de contrôle d'ASC à modes multiples selon la revendication 1, **caractérisé en ce que**, l'ASC à modes multiples comprend en outre trois unités de filtre arrière, et le mode de sortie à sortie unique comprend le mode à trois entrées et à sortie unique et le mode à entrée unique et sortie unique ; dans le mode de sortie à sortie unique, chaque unité d'alimentation électrique d'inversion est raccordée à une unité de filtre arrière pour former un circuit d'inversion et de filtre ; trois circuits d'inversion et de filtre sont formés au total, et les trois circuits d'inversion et de filtre sont raccordés en parallèle.

4. Un procédé de contrôle d'ASC à modes multiples selon l'une quelconque des revendications 1-3, **caractérisé en ce que**, avant l'étape de réduction de la quantité opérationnelle d'unités d'alimentation électrique de l'ASC à modes multiples correspondant au mode opérationnel si le taux de charge est inférieur au premier seuil (104), le procédé de contrôle comprend en outre :
déterminer si le taux de charge est inférieur à un deuxième seuil prédéfini, dans lequel le deuxième seuil est un nombre rationnel supérieur à 0 et inférieur à 1, et le deuxième seuil est inférieur au premier seuil ; et
de façon correspondante, l'étape de réduction de la quantité opérationnelle d'unités d'alimentation électrique de l'ASC à modes multiples correspondant au mode opérationnel si le taux de charge est inférieur au premier seuil comprend :
si le taux de charge est inférieur premier seuil et non inférieur au deuxième seuil, réduire la quantité opérationnelle d'unités d'alimentation électrique de l'ASC à modes multiples correspondant au mode opérationnel selon une première quantité spécifiée ; et
si le taux de charge est inférieur deuxième seuil, réduire la quantité opérationnelle d'unités d'alimentation électrique de l'ASC à modes multiples correspondant au mode opérationnel selon une deuxième quantité spécifiée, dans lequel la deuxième quantité spécifiée est supérieure à la première quantité spécifiée.

5. Un procédé de contrôle d'ASC à modes multiples selon la revendication 4, **caractérisé en ce que**, le premier seuil est de 2/3, et le deuxième seuil est de 1/3.

6. Un dispositif de contrôle pour ASC à modes multiples dans lequel l'ASC à modes multiples comprend trois unités d'alimentation électrique de rectification, et un mode opératoire des trois unités d'alimentation électrique de rectification comprend un mode d'entrée à entrée unique ; ou
trois unités d'alimentation électrique d'inversion, et un mode opératoire des trois unités d'alimentation électrique d'inversion comprend un mode de sortie à sortie unique ;
le procédé comprenant :
une unité d'acquisition de taux de charge (41), dans laquelle l'unité d'acquisition de taux de charge est configurée pour obtenir le taux de charge de l'ASC à modes multiples ;
une unité d'acquisition de mode opératoire (42), dans laquelle l'unité d'acquisition de mode opératoire est configurée pour obtenir le mode opératoire de l'ASC à modes multiples ;
une première unité de détermination (43), dans laquelle la première unité de détermination est configurée pour déterminer si le taux de charge est inférieur à un premier seuil prédéfini, dans lequel le premier seuil est un nombre rationnel supérieur à 0 et inférieur à 1 ; et
une unité de contrôle (44), dans laquelle l'unité de contrôle est configurée pour, si le taux de charge est inférieur au premier seuil prédéfini, réduire la quantité opérationnelle d'unités d'alimentation électrique de l'ASC à modes multiples correspondant au mode opérationnel de l'ASC à modes multiples en faisant cesser le fonctionnement d'une ou de deux unités d'alimentation électrique en état opérationnel.

7. Un terminal de contrôle (5), comprenant une mémoire (51), un processeur (50), et un programme informatique (52) stocké dans la mémoire et exécutable sur le processeur, dans lequel, le processeur est configuré pour exécuter le programme informatique afin qu'il mette en œuvre les étapes du procédé de contrôle pour l'ASC à modes multiples de l'une quelconque des revendications 1-5.

8. Un support de stockage apte à être lu par ordinateur, **caractérisé en ce que**, un programme informatique est stocké sur le support de stockage apte à être lu par ordinateur, et le programme informatique est configuré pour être exécuté par un processeur afin qu'il mette en œuvre les étapes du procédé de contrôle pour l'ASC à modes multiples de l'une quelconque des revendications 1-5.
